# EUROPEAN PATENT APPLICATION

(11) **EP 1 833 016 A1**
(43) Date of publication of application: **12.09.2007**
(21) Application number: 07004753.5
(22) Date of filing: 08.03.2007
(51) Int. Cl.: G06Q 40/00

(54) **Telematic system for the creation of attention signals and consequent/facilitated sending of trading orders for buying and selling financial instruments from a remote, fixed or mobile, informative-operative terminal**

(30) Priority: 10.03.2006 IT TO20060185
(71) Applicant: Directa S.I.M.P.A., 10121 Torino (IT)
(72) Inventor: Fabbri, Mario, 10121 Torino (IT)
(74) Representative: Lotti, Giorgio

(57) **Abstract**

The present invention regards a telematic system for real-time monitoring of data pertaining to the past and future trends of financial markets, with generation of attention signals linked to particular logic conditions being satisfied, which depend upon external data that can be pre-defined by the user and can be associated to drafts/order proposals of trading of financial instruments.

The telematic system referred to above comprises a central control unit, connected to at least one telematic market of financial instruments and provided with transceiver means for connection to a remote informative-operative terminal (network-connected personal computer, cellphone or palmtop computer that can be connected to the Internet). The aim of the present invention is hence to provide a system and a procedure that will enable, once given pre-definable logic events are reached, transactions to be made on financial markets with the shortest possible delay even in the case where mobile devices available are habitually kept in stand-by but are able to receive attention signals continuously.

## Description

The present invention relates to a telematic system for the creation of attention signals and consequent/facilitated sending of trading orders for buying and selling financial instruments from a remote informative-operative terminal, either fixed or mobile.

In greater detail, the invention concerns a system for the selection and sending of orders for purchase or sale of financial instruments that will enable definition on a central control unit of the attention signals linked to the occurrence of one or more events, typically consisting in particular quotations being reached on the financial market, sending thereof to a remote informative-operative terminal, which may even be a mobile device, and consequent facilitated activation of a complete connection with the financial markets for a wider view of the situation and a possible sending of trading orders, it being even possible for said orders to be already pre-entered/proposed by the central control unit but still modifiable and/or to be approved on the remote informative-operative terminal.

As is known, there currently exist many systems for making orders of purchase and sale telematically on financial markets. Brokerage-on-line services, in particular offered by stockbroking companies (Broker-SIM) with access portals that can be reached by the investors via the Internet, are by now widespread.

Said services supply a portal accessible via the Internet, which enables real-time consultation of financial data and operation on the markets for managing directly one's own portfolio of shares or other financial instruments.

An example of such a service is described in the international patent application filed in the name of the present applicant under No. WO 03/001417 A2. The system described enables making selections of financial instruments and orders thereon in an efficient way from a network-connected computer.

It is possible to make orders also by means of mobile terminals, such as a cellphone or palmtop computer that can be connected to the Internet.

Access to the service of the SIM portal is possible in so far as also said mobile terminals are equipped with means for connection to the telematic network/Internet and make available appropriate interaction means (keyboard, optical pen, interactive screen, and the like), which will enable selection of the financial instruments on the display and forwarding of data and commands.

Said services can provide the user with the possibility of monitoring the price trend of a financial instrument with respect to predetermined levels.

It is currently possible, for example, to receive a message on the cellphone (SMS) in the case where the price or the volumes of exchange, of a share, exceed or drop below a certain threshold; but the logic condition can be more complex and refer, instead of to a simple comparison between the prices and a pre-set value, to "indicators" the value of which depends upon mathematical functions that can be calculated on the basis of the trend of time series, price, quantity, etc. of the various financial instruments, indices or any other events that can be quantified in real time.

In this way, an attention signal can be generated that highlights the occurrence of any event, where the term "event" is meant in the broad sense of any development worthy of note and capable of affecting the trend of the financial market.

It is to be considered that in the activities of so-called "intraday trading", and referred to also as "scalping", i.e., ones in which the positions are liquidated within days or even just a few minutes, and in which the profit margins are very reduced and the price trends are subject to rapid oscillations, the timeliness in sending trading orders is absolutely essential.

Consequently, the problems to be solved are two correlated problems. The first is that developments that are of interest for the trader may occur at any moment on a wide range of market sections that are hence difficult to keep continuously under observation. This problem can in actual fact already be solved using, for monitoring the market trend, processors that receive data in real time and, if need be, create attention signals. However, even when the user is equipped in this way, there remains to be tackled the problem of the delay between arrival of the attention signal and sending of the possible trading order on the market. It is precisely on this second point that the invention proposes an important innovation for the trader, in so far as:
1) it is possible, upon functional construction of the attention signal, to draw up already a draft/order proposal to be sent to the markets (quantity and price that are pre-set or else variable according to a more complex function linked to the situation of the market and of the portfolio of the trader);
2) the arrival of the attention signal functions also as "trigger" for full activation of the informative-operative functionality of the terminal-device, which can thus even remain normally in a stand-by condition (as is particularly useful in the case of mobile devices) or be used for other purposes, but upon arrival of the attention signal, automatically or after confirmation - and hence easily and in extremely short times - connects up to the brokerage-on-line service, proposes, if it had thus been prearranged, the pre-entered order and enables convenient modification and sending thereof to the markets in the extremely short times that are essential to obtain the best financial result.

In the absence of the above prearrangements and automatic procedures, the operating gains could reduce or even wipe out any profits that might be obtained.

In the light of the foregoing, the purpose of the present invention is to provide a system and a procedure that will enable, when given pre-definable logic events are reached, transactions to be made on the financial markets with the shortest delay even in the case where there are available mobile devices that are habitually kept in stand-by, but are capable of receiving attention signals continuously.

Consequently, forming a specific subject of the present invention is a telematic system for monitoring the trend of financial markets in real time with: the generation of attention signals linked to particular logic conditions being satisfied, which depend upon market data and external data and are possibly linked to order proposals on financial instruments; the possibility of transmitting said attention signal, and annexed thereto the possible pre-entered order, to the remote informative-operative terminal; and the immediate attention and focusing by the remote terminal on its informative-operative functionalities for enabling verification, variation, or entering of orders *ex novo;* the effect being that of enabling sending of trading orders on financial instruments to the markets in extremely short times.

Furthermore, according to the invention, the financial data in real time can include quotations, quantities exchanged and more in general any numerical or logic datum pertaining to the past or possible future trends of the quotations of the financial instruments. The generation of attention signals arises from the continuous verification of whether a given logic function of said data assumes or not the value <TRUE>. Said function can be of a very simple type, for example: <Has the price of the security XX become higher than or equal to the value XY?>, or else even very complex, for example: <the value of the mean square deviation of the price of the last 20 exchanges exceeds 0.1 <AND> <Is the price of the security XX higher than 5?>.

Preferably according to the invention, to this attention signal there can be associated a pre-entered order that in turn can be either of a very simple type, for example: <buy 100 units of the security XX at market price>, or else more complex, for example: <sell half of the units of the security XX that I have in my portfolio>, or even more complex, for example: <sell half of the quantity of the security XX and with the proceeds buy as many units of the security YY as possible, at the price that will at that moment be current on the market>.

Once again according to the invention, the remote informative-operative terminal can be kept in stand-by and hence will not at that moment be in an operating condition, but only in a condition to receive attention signals, or may even be active, but focused on an activity different from the on-line brokerage service, or even active on the on-line brokerage service, but not focused on the particular security/market for which the particular event is produced.

Again according to the invention, the connection between generation of the attention signal, operative trading portal - central control unit and remote informative-operative terminal may be telephonic, through the Internet, via radio or via any other network that enables telematic connections.

Furthermore, according to the invention, the financial instruments that can be treated by the remote informative-operative terminal comprise any financial instrument negotiable on regulated markets or on organized exchange systems.

Further forming a subject of the present invention is an attention procedure for a remote informative-operative terminal included in a telematic system for selection and sending of trading orders for buying and selling financial instruments on a remote informative-operative terminal, characterized in that it comprises the following steps:
(a) real-time acquisition by said central control unit of data regarding one or more financial instruments of the telematic markets or indices thereof or data on any other event that is able to influence the rates and is quantifiable in real time;
(b) verification of whether a logic function of said data assumes the value <TRUE>;
(c) if the value of the function remains <FALSE> the procedure returns to step (a); otherwise it passes to step (d);
(d) generation of an attention signal for the remote informative-operative terminal, with possible association of one or more order proposals pre-entered by the trader;
(e) reception of the attention signal, with issuing of (acoustic, visual, or vibratory) warning signals by the remote informative-operative terminal, and display of the corresponding information;
(f) activation, after possible confirmation of the investor, of the full informative/operative functionality of the remote terminal that is focused on the data and financial instruments connected to the attention signal and to the possible order proposal;
(g) prearrangement of trading devices to the possible modification/acceptance of the orders; and
(h) possible sending of the order.

The present invention will now be described by way of non-limiting illustrative example, according to its preferred embodiments, with particular reference to the figures of the attached plate of drawings, in which:
- Figure 1 shows a telematic system for the creation of attention signals, and consequent and facilitated sending of trading orders for buying and selling financial instruments from remote informative-operative terminals, including mobile devices;
- Figure 2 shows a remote informative-operative terminal, in this case, a mobile device, in a stand-by condition;
- Figure 3 shows the remote informative-operative terminal that has been reached to the attention signal, said attention signal being shown on the display;
- Figure 4 shows the remote informative-operative terminal already activated in its full functionalities of connection to the central control unit of the on-line brokerage system and displayed on which is the order pre-entered/associated to the attention signal shown for possible modification/forwarding thereof;
- Figure 5 shows the procedure of operation of a central control unit of the system according to the present invention; and
- Figure 6 shows the procedure of operation of a remote informative-operative terminal of the system according to the present invention.

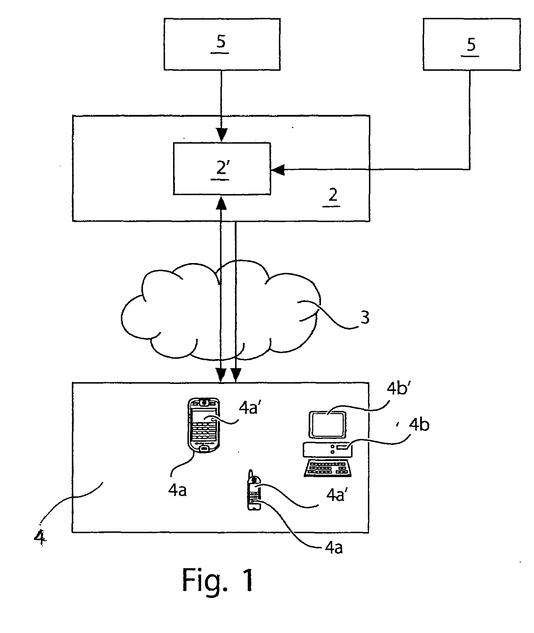

With reference to Figure 1, an embodiment of the telematic system 1 according to the present invention is illustrated.

In particular, the telematic system 1 comprises a central control unit 2, which includes a computer/unit for processing and execution of logic operations 2', and connection means 3 for connection of said central control unit 2 to a remote terminal 4.

Said connection means 3 can be the Internet, the telephone network, or any other network that enables telematic connections.

Said central control unit 2 is connected to at least one active telematic market of securities and/or financial instruments, and possibly to other markets and sources of information, designated by the reference number 5.

The central control unit 2 can send attention signals and send/receive data to/from the remote terminal 4.

Said remote informative-operative terminal 4 can, for example, be a network-connected computer 4b, a cellphone or a programmable palmtop computer 4a, i.e., a remote informative-operative terminal. In the latter case, the connection between said central control unit 2 and said remote mobile terminal 4a may be, as has been said, of a mobile-phone type, e.g., GSM, GPRS or UMTS.

When the pre-defined logic function of market data or external data becomes <TRUE>, the telematic system of Figure 1 activates a procedure of connection capable of communicating directly between the central control unit 2 and the remote terminal 4 and/or simultaneously prearranges the operating grid on the screen or display of the remote informative-operative terminal 4a (which, as has been said, can also, for example, be a cellphone or palmtop computer or PC).

Said conditions may consist, by way of example, in overstepping a threshold of the market price of a financial instrument that can be pre-defined by the user.

At this point, the remote informative-operative terminal 4 can perform one of the following operations:
(i) simply warn the user, for example by means of an acoustic, visual, or vibratory signal;
(ii) warn the user as per the preceding point (i) and, in real time, present on the display 4a'-4b' all the data for making movements of purchase or sale, possibly with the parameters (quantity, sale price, conditions), pre-entered and modifiable.

Considering the case where the remote informative-operative terminal 4 is, for example, a cellphone or a palmtop computer 4a, when it is interfaced with said central control unit 2, shown on the display 4a' is the grid that enables direct operation on the financial security/securities corresponding to the attention signal/signals.

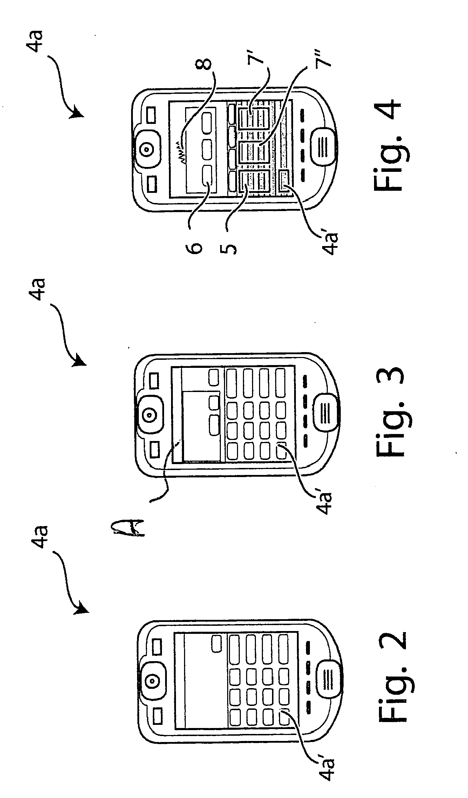

Figures 2 - 4 show the various states of the remote informative-operative terminal 4 following upon activation of the procedure of connection with said central control unit 2.

In greater detail, Figure 2 shows a remote informative-operative terminal 4, in the form of a palmtop computer, in a wait or stand-by state.

Figure 3 shows said remote terminal 4a, which reproduces on the display 4a' the warning to the user that the security "A" has reached a predefined target price.

Finally, Figure 4 shows said mobile terminal 4a having on the display 4a' a grid that reports all the information and the instruments for making a trading order, such as:
- list of securities of a portfolio 5;
- soft keys for selection and trading 6;
- order quantities previously entered 7';
- purchase or sale price previously entered 7'' ; and
- graphs of the price trend of the financial instrument 8,
in other words, all the information and the instruments suitable and prearranged for making orders of purchase or sale on one or more financial instruments.

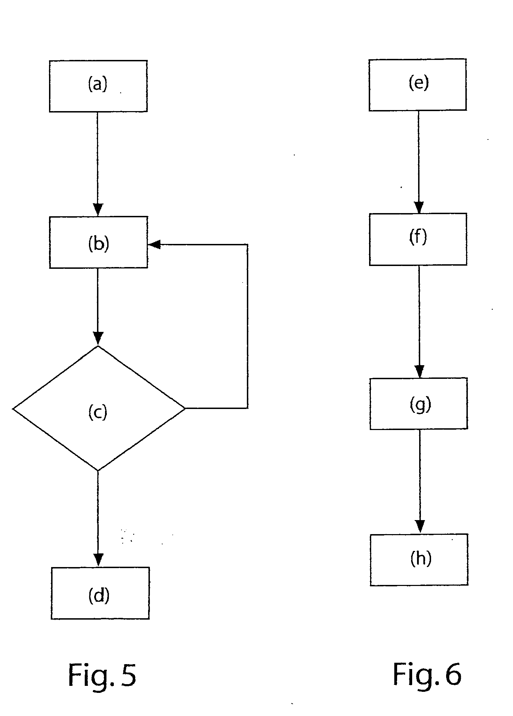

Shown in Figures 5 and 6 are the procedures executed, respectively, by the central control unit 2 and by the remote informative-operative terminal 4 of the telematic system of Figure 1 according to the present invention.

The procedure of the central control unit 2, for interfacing to the remote terminal 4, envisages the following steps:
(a) real-time acquisition by said central control unit 2 of data regarding one or more financial instruments of telematic markets or indices thereof, or data on other events that may influence the rates and that can be quantified in real time;
(b) selection and processing in real time of a logic function of said data;
(c) verification of whether said function assumes the value <TRUE>; if said verification is not satisfied, the procedure returns to step (a); otherwise it proceeds to step (d);
(d) generation of an attention signal for the remote terminal 4, with the possible sending of data of one or more pre-entered order proposals.
   The procedure regarding the attention signal on the remote terminal 4 comprises principally the following steps:
(e) reception of the attention signal, with issuing of (acoustic, visual, or vibratory) warning signals, by the remote terminal 4;
(f) activation, after possible confirmation on the part of the user, of the full informative/operative functionality of the remote terminal 4 that is focused on the data and financial instruments associated to the attention signal and to the possible order proposal, with display of the corresponding information on the screen (4a, 4b);
(g) prearrangement for possible modification/acceptance of the trading orders; and
(h) cancellation, modification or sending of the order by the user.

As may be seen, upon arrival of the attention signal, the user may immediately find, on the display of the remote informative-operative terminal 4, the informative-operative instruments for carrying out the trading operations possibly with parameters that have already been pre-entered.

On the basis of the foregoing description, it may be noted that the fundamental characteristic of the present invention is the fact of enabling activation of a procedure of connection of a remote informative-operative terminal for executing operations of trading on shares or securities in general, enabling a high speed of execution of the operations, i.e.,
- it is possible, at the moment of functional definition of the attention signal, to draw up already the type of order to be sent to the markets (quantity and price that are either pre-set or else variable with a more complex function linked to the market situation or portfolio situation of the user);
- arrival of the attention signal functions also as warning for full activation of the informative-operative functionalities of the terminal, which can hence even remain normally in a stand-by condition, as is useful in the case of mobile devices, or be used for other purposes; in any case, upon arrival of the attention signal, automatically or after confirmation - and hence easily and in extremely short times - said terminal is able to connect up to the central control unit 2, proposing, if it had so been prearranged, the pre-entered order and enabling a rapid modification and sending thereof to the markets in the extremely short times that are essential for obtaining the best financial result.

An advantage of the present invention is the possibility of making transactions using methods of scalping also with remote informative-operative terminals.

The present invention has been described by way of non-limiting illustration, according to its preferred embodiments, but it is to be understood that variations and/or modifications may be made by persons skilled in the branch, without this implying any departure from the corresponding sphere of protection, as defined by the annexed claims.

## Claims

1. A telematic system (1) for signalling and sending trading orders for buying and selling financial instruments from a remote informative-operative terminal (4), comprising: a central control unit (2) for the telematic trading of said instruments connected to at least one telematic market (5) and to other data sources regarding the quotations or other events able to influence the prices of the financial instruments, capable of storing a series of logic functions, each regarding a different user, and of calculating them continuously according to the real-time updating of said data; and at least one remote informative-operative terminal (4) for each user that comprises interaction means and can be connected to said central control unit (2); said system (1) being **characterized in that**, when one of said logic functions assumes the value <TRUE>, said central control unit (2) sends to the remote informative-operative terminal (4) of the user ???who has defined said logic function, an attention signal and a data packet, which specifies the conditions that have generated the alarm, for enabling and facilitating connection between the remote informative-operative terminal and the market, a more extensive verification of the situation thereof, and possible sending of trading orders.

2. The system (1) according to Claim 1, **characterized in that** it includes the possibility of associating to said logic function, configured on the central control unit (2), one or more drafts of trading orders for buying and selling financial instruments with parameters predefined by the user, in all or in part modifiable according to the situation of the market and of the portfolio of the client at that moment; said draft, by being transmitted to said remote informative-operative terminal (4) of the user together with the attention signal, supplying an immediate order proposal or proposals that can immediately be confirmed, or can be modified and forwarded to said telematic market/ market s (5).

3. The system (1) according to any one of the preceding claims, **characterized in that** said remote informative-operative terminal (4) is a computer (4b).

4. The system (1) according to any one of the preceding claims, **characterized in that** said interaction means comprise a display, a keyboard (4a') and/or an optical pen or other interaction instruments.

5. The system (1) according to any one of the preceding claims, **characterized in that** said data comprise prices and/or volumes regarding said securities and any other quantifiable information capable of influencing the price trend of the financial instruments.

6. The system (1) according to any one of the preceding claims, **characterized in that** said data comprise pre-entered trading parameters as fixed values or else even values that are variable according to the situation of the market or of the portfolio of the client for immediately executing a trading operation.

7. The system (1) according to any one of the preceding claims, **characterized in that** said conditions are dependent upon one or more logic conditions that are functions of external data and regard any other quantifiable information capable of influencing the price trend of the financial instruments.

8. The system (1) according to any one of the preceding claims, **characterized in that** the remote informative-operative terminal (4), following upon connection to said central control unit (2), displays a selection grid of securities comprising soft keys (9) for making said orders of purchase or sale.

9. The system (1) according to any one of the preceding claims, **characterized in that** the connection between said central control unit (2) and said remote informative-operative terminal (4) is of a telephone type, preferably GSM and/or GPRS and/or UMTS, or any other subsequent one.

10. The system (1) according to any one of the preceding claims, **characterized in that** said connection means (3) comprise the Internet or any other network that enables telematic connections.

11. The system (1) according to any one of the preceding claims, **characterized in that** said securities comprise shares and/or options and/or bonds and/or financial instruments in general.

12. An attention procedure for a remote informative-operative terminal (4) included in a system as defined in Claims 1 - 11, **characterized in that** it comprises the following steps:
(a) real-time acquisition by said central control unit (2) of data regarding said one or more securities and other data from said active telematic market and from other data sources;
(b) verification of one or more logic functions, each of which regarding a different user who can pre-define them and consign them to the central control unit (2), on the basis of said data;
(c) if said one or more logic functions is/are not verified, the procedure returns to step (a), otherwise it proceeds to step (d);
(d) generation and sending of an attention signal of the terminal/terminals corresponding to the user who has entered said logic function that has become <TRUE> (4) and of a data packet containing the information on the logic condition that has triggered the attention signal, and possibly sending of the drafts of trading orders;
(e) reception of the attention signal by said remote informative-operative terminal (4) and display of the corresponding information;
(f) issuing of an attention signal;
(g) automatic or optional connection after confirmation/acceptance of the attention signal, between said remote informative-operative terminal (4) and said central control unit (2); and
(h) display on the display of said remote informative-operative terminal (4) of whatever may be necessary to get information on the trend of the markets and make trading operations also on the basis of possible drafts of pre-defined orders.

13. The procedure according to Claim 12, **characterized in that** said data for predefinition of one or more orders are a function of the market data and/or of the situation of the portfolio of the user.

14. The procedure according to either Claim 12 or Claim 13, **characterized in that** in step (a) said central control unit (2) carries out processing of said data to obtain said parameters.

15. The procedure according to any one of Claims 12 - 14, **characterized in that** said signal is visual, acoustic and/or vibratory.
